# EUROPEAN PATENT SPECIFICATION

(11) **EP 2 712 831 B1**
(45) Date of publication and mention of the grant of the patent: **27.07.2016**
(21) Application number: 13184734.5
(22) Date of filing: 17.09.2013
(51) Int. Cl.: B65H 54/48, B29C 45/14

(54) **Traverse drum, yarn winding device, and method of manufacturing traverse drum**
Changiertrommel, Garnwickelvorrichtung und Verfahren zur Herstellung einer Changiertrommel
Bobinoir, dispositif de bobinage de fil et procédé de fabrication d'un tambour de traverse

(30) Priority: 26.09.2012 JP 2012212855; 17.06.2013 JP 2013126645
(43) Date of publication of application: 02.04.2014
(73) Proprietor: Nimei Seiki Co., Ltd., Toki-shi Gifu 509-5142 (JP)
(72) Inventor: Hirukawa, Masao, Toki-shi, Gifu, 509-5142 (JP); Tanaka, Katsuya, Toki-shi, Gifu, 509-5142 (JP); Ichihara, Kazuki, Toki-shi, Gifu, 509-5142 (JP)
(74) Representative: Hoffmann Eitle

(56) References cited:
- JP-A- 2002 003 080

## Description

### BACKGROUND OF THE INVENTION

### 1. Field of the Invention

The present invention relates to a traverse drum, a yarn winding device, and a method of manufacturing the traverse drum.

### 2. Description of the Related Art

In a yarn winding device such as an automatic winder that winds a yarn into a package, a traverse drum is pressed against the package and driven to rotate. The package rotates together with the traverse drum whereby the yarn is wound into the package. A traverse groove is provided on the outer peripheral surface of the traverse drum. The traverse groove creates an endless track. The yarn is guided along the traverse groove and is evenly wound into the package with respect to the axial direction of the package (See, for example, Japanese Patent Application Laid-open No. 2002-3080).

Conventionally, metals such as aluminum and iron have been commonly used as materials of traverse drums. The pattern of the groove is complex. Accordingly, in order to simplify the production process, possibilities of molding a resin traverse drum by using a mold or the like has been considered. In an arrangement in which the resin traverse drum is supported with a supporting member inserted in the traverse drum, high durability is required for portions of the supporting member and the traverse drum that rub each other.

JP 2002/003080 A discloses features falling under the preamble of claim 1.

### SUMMARY OF THE INVENTION

The present invention has been conceived in light of the above problem. It is an object of the present invention to provide a traverse drum that exhibits high durability, a yarn winding device that includes such a traverse drum, and a method of manufacturing the traverse drum.

To solve the above problem, a traverse drum according to an aspect of the present invention has the features of claim 1.

According to another aspect of the present invention, a yarn winding device includes a winding section that includes the above traverse drum, and the winding section winds into a package a yarn guided by the traverse drum.

According to still another aspect of the present invention, a yarn winding device includes a winding section that includes the above traverse drum and a drive source that drives the drum main body such that a yarn guided by the traverse drum is wound into a package. The supporting member is a shaft member that is arranged in the winding section and that has a first end and a second end. The first end of the shaft member is coupled to the drive source. A conical portion that is tapered toward a tip thereof is formed at the second end of the shaft member. The conical portion is coupled to the inner peripheral surface of the sleeve that is tapered, and the traverse drum is thereby supported by the supporting member.

According to still another aspect of the present invention, a method of manufacturing a traverse drum includes arranging, in a mold for molding a drum main body having a traverse groove, a cylindrical sleeve into which a supporting member that rotatably supports the drum main body is inserted; injecting a resin into a gap between an inner surface of the mold and an outer peripheral surface of the sleeve; and detaching the mold from the drum main body after the sleeve is arranged as a unified piece with the resin in the drum main body.

The above and other objects, features, advantages and the technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram of an outer peripheral surface of a traverse drum according to a first embodiment of the present invention when viewed from one side;
FIG. 2 is a diagram of the outer peripheral surface of the traverse drum according to the first embodiment when viewed from another side;
FIG. 3 is a perspective view of the traverse drum according to the first embodiment with a portion of the traverse drum cut away;
FIG. 4 is a cross section of a coupling structure that couples the traverse drum and a driving section that drives the traverse drum according to the first embodiment;
FIG. 5 is a cross section of a coupling structure that couples a traverse drum and a driving section that drives a traverse drum according to a second embodiment;
FIG. 6 is a cross section of a coupling structure that couples a traverse drum and a driving section that drives a traverse drum according to still a third embodiment;
FIG. 7 is a cross section of a shaft member that is being detached from the traverse drum according to the third embodiment; and
FIG. 8 is a cross section of the structure along a line VIII-VIII shown in FIG. 4.

### DETAILED DESCRIPTION

Exemplary embodiments of a traverse drum, a yarn winding device, and a method of manufacturing the traverse drum according to the present invention are explained in detail below with reference to the accompanying drawings.

### First Embodiment

A first embodiment of a traverse drum according to the present invention is explained below. The traverse drum is used in a yarn winding device that winds a yarn fed from a supply bobbin into a package. Supply bobbins prepared in a previous process by a spinning frame are set on trays, for example, and transported from the spinning frame to the yarn winding device. Generally, multiple such yarn winding devices are arranged side by side to form an automatic winder.

In the yarn winding device, a bobbin supporting section, a yarn unwinding assisting device, a pre-clearer, a gate-type tenser, a tension sensor, a lower yarn catcher, a splicer, a cutter, a yarn clearer (yarn defect detector), an upper yarn catcher, and a winding section are arranged in this order from an upstream side (from a bottom side, for example) along a yarn running route (i.e., a yarn path). These components are mounted on a main body of the yarn winding device. The yarn winding device also includes a control section that controls each component of the yarn winding device, and a display that displays an operational state and the like of the yarn winding device. The control section exchanges various kinds of information regarding a winding operation with a controller that controls the entire automatic winder.

The bobbin supporting section supports the supply bobbin upright. The yarn unwinding assisting device controls, with a cylindrical member arranged above the supply bobbin, a balloon of the yarn unwound from the supply bobbin. The gate-type tenser holds the yarn in a zigzag pattern with a pair of gates, a fixed comb-tooth gate and a movable comb-tooth gate, thereby applying a predetermined tension to the running yarn. The tension sensor measures the tension applied to the yarn by the gate-type tenser.

The pre-clearer regulates passage of large yarn defects, which are larger than a predetermined value, with a pair of regulating members arranged a predetermined distance apart from each other across the yarn path. The yarn clearer detects small yarn defects, such as slub, during winding of the yarn. The cutter cuts the yarn when the yarn clearer detects such a yarn defect. When the cutter has cut the yarn or when the yarn has run out (hereinafter, "when the yarn is cut"), the splicer joins the yarn end from the supply bobbin and the yarn end from the package (i.e., joins the yarn ends).

The lower yarn catcher is pivotable upwardly and downwardly around a shaft line, and has a suction vent at its pivoting end. The suction vent of the lower yarn catcher is freely positionable between a position above the splicer and a position below the pre-clearer. The upper yarn catcher is pivotable upwardly and downwardly around a shaft line, and has a suction vent at its pivoting end. The suction vent of the upper yarn catcher is freely positionable between a position below the splicer and the winding section. With such an arrangement, the lower yarn catcher is positioned at a downwardly pivoted position to suck the yarn end from the supply bobbin through the suction vent, and then pivots upwardly to deliver the yarn end from the supply bobbin to the splicer. Meanwhile, the upper yarn catcher pivots upwardly to suck the yarn end from the package through the suction vent, and then pivots downwardly to deliver the yarn end from the package to the splicer.

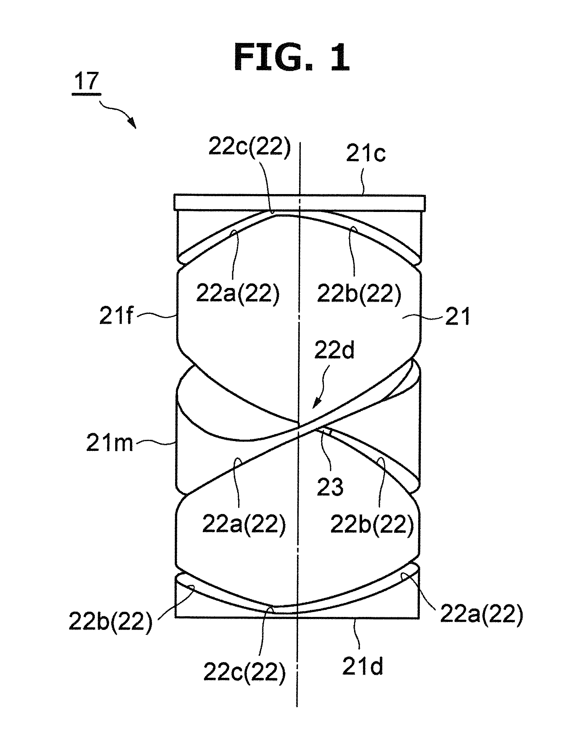

The winding section winds the yarn that has been unwound from the supply bobbin into the package, forming a fully wound package having a predetermined amount of yarn. The winding section includes a traverse drum 17 having a traverse groove formed therein (see, for example, FIG. 1) and a cradle that rotatably supports the package. The cradle brings the surface of the package into contact with the surface of the traverse drum 17 under an appropriate pressure during winding of the yarn. Accordingly, when the winding section drives the traverse drum 17 to rotate, the package is rotated following the rotation of the traverse drum 17. As the traverse drum 17 and the package rotate, the yarn is wound into the package while being traversed in a predetermined width. When the yarn is cut, the cradle lifts the package up to detach the surface of the package from the surface of the traverse drum, brakes the package, and brings the rotation of the package to a halt.

The cradle includes a pair of cradle arms. A package holder is mounted on one cradle arm, while another package holder is mounted on the other cradle arm, and these package holders hold the package rotatably around the rotational axis of the package.

Next, the traverse drum 17 is explained in detail.

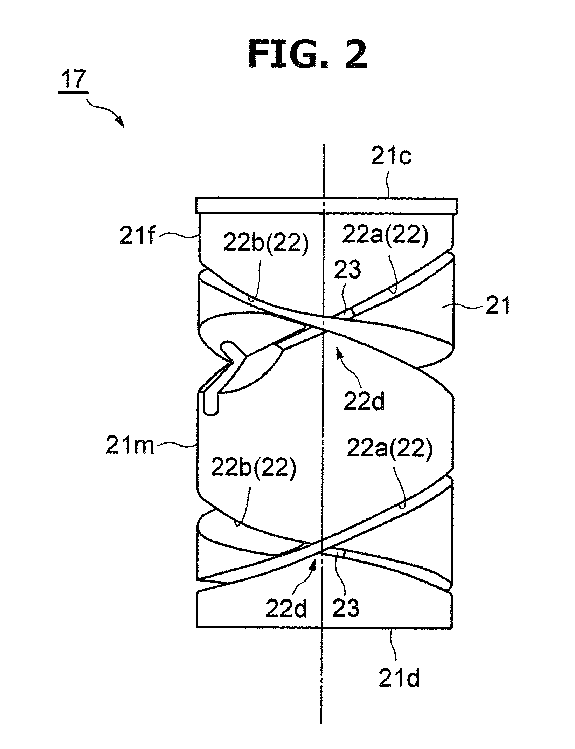

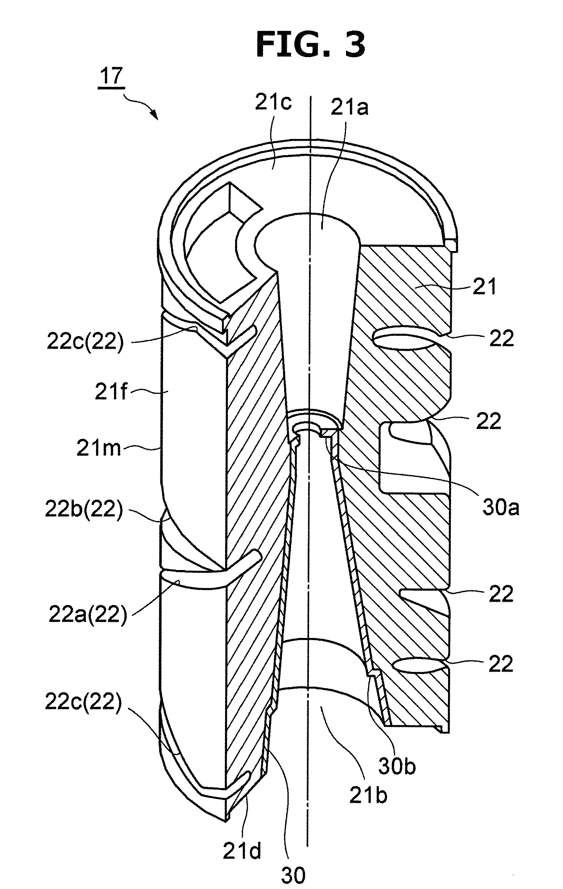

FIG. 1 is a diagram of the outer peripheral surface of the traverse drum 17 when viewed from one side, and FIG. 2 is a diagram of the outer peripheral surface of the traverse drum 17 when viewed from another side. FIG. 3 is a perspective view of the traverse drum a portion of which is cut away. As shown in these drawings, the traverse drum 17 includes a substantially cylindrical drum main body 21. The drum main body 21 is formed of, for example, a resin of polyurethane mixed with aluminum hydroxide by using a mold.

As shown in FIG. 3, a cylindrical hollow portion 21a, which is formed when cutting out with the mold, and a cylindrical sleeve 30 are arranged at a central portion of the drum main body 21. The sleeve 30 is fixed inside the drum main body 21. The term "fixed" here means that the drum main body 21 and the sleeve 30 are firmly attached to each other to form one piece unless a force strong enough to destroy the drum main body 21 is exerted. The hollow portion 21a is tapered, spreading out toward a first end surface 21c of the drum main body 21 in the axial direction. The sleeve 30 is also tapered, spreading toward a second end surface 21d of the drum main body 21. Thus, the hollow portion 21a and the sleeve 30 spread in opposite directions. For the sleeve 30, it is preferable to use a material having a higher durability than the material of the drum main body 21, such as a metal. The hollow portion 21a communicates with a hollow portion 21b formed inside the sleeve 30.

As mentioned above, a traverse groove 22 is formed in an outer peripheral surface 21f of the drum main body 21. The traverse groove 22 includes, as shown in FIGS. 1 and 2, a grooved portion 22a for guiding the yarn to a first side in the axial direction of the drum main body 21 when the traverse drum 17 rotates, a grooved portion 22b for guiding the yarn to a second side, and a grooved portion 22c for reversing a yarn guiding direction. The grooved portion 22a, the grooved portion 22b, and the grooved portion 22c form an endless track in the drum main body 21. The cross sectional structure of the traverse groove 22 is suitably designed in consideration of a hooking condition of the yarn. At crossing portions 22d of the grooved portion 22a and the grooved portion 22b, metal chips 23 or the like are fixed if necessary. These chips 23 ensure the strength of the crossing portions 22d.

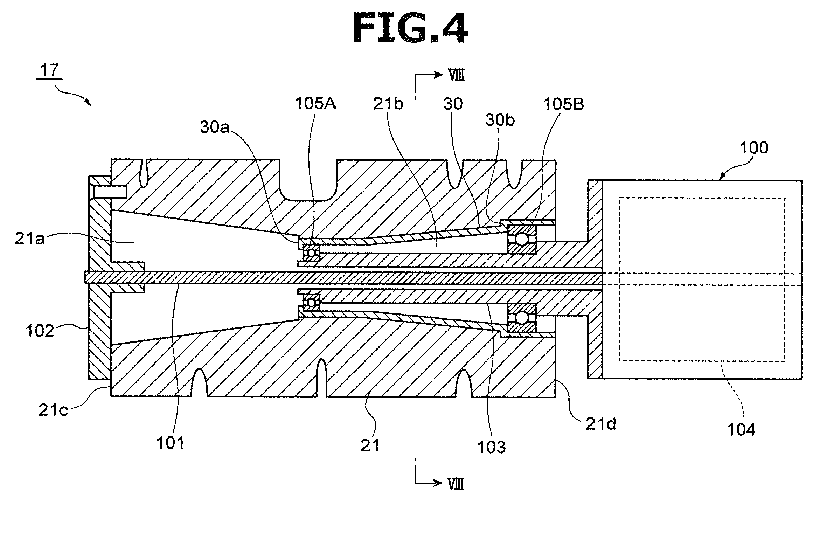

FIG. 4 is a cross section of a coupling structure of the traverse drum and a driving section that drives the traverse drum. The winding section includes, in addition to the traverse drum 17 and the cradle, a driving section 100. The traverse drum 17 is driven by this driving section 100. The driving section 100 includes a drive shaft 101, a supporting member 103, and a driving motor (drive source) 104. The supporting member 103 extends from a casing of the driving section 100. The supporting member 103 is cylindrical. The supporting member 103 is insertable into the sleeve 30 from the second end surface 21d side of the drum main body 21.

Bearings 105A and 105B are arranged around the outer periphery of the supporting member 103. The inner peripheral surface of the sleeve 30 supports outer peripheral portions of the bearings 105A and 105B. With this structure, the drum main body 21 is rotatably supported by the supporting member 103, with the bearings 105A and 105B and also with the sleeve 30 interposed in between. A projecting positioning member 30a is arranged on a portion of the inner surface of the sleeve 30 that supports the bearing 105A, and a projecting positioning member 30b is arranged on a portion of the inner surface that supports the bearing 105B. The bearing 105A is made to abut with the positioning member 30a thereby preventing the bearing 105A from moving toward the first end surface 21c of the drum main body 21. The bearing 105B is made to abut with the positioning member 30b thereby preventing the bearing 105B from moving toward the first end surface 21c of the drum main body 21.

The drive shaft 101 is insertable into the supporting member 103 and extends to a position near the first end surface 21c of the drum main body 21. A disk-like flange 102 is mounted on a tip portion of the drive shaft 101. The flange 102 is fixed to the first end surface 21c of the drum main body 21 with a screw or the like. A base end of the drive shaft 101 is coupled to the driving motor 104, and the drive shaft 101 thereby functions as the drive shaft of the driving motor 104. Consequently, when the driving motor 104 rotates the drive shaft 101, the rotational force is conveyed from the drive shaft 101 to the drum main body 21 via the flange 102, and the traverse drum 17 is thereby rotated.

How the traverse drum 17 is produced is now explained. First, a master mold of the traverse drum 17 is positioned inside a substantially cylindrical casing, and liquid silicon resin is injected into a gap between the casing and the master mold through an injection hole provided in the casing. The master mold is taken out of the casing after a predetermined period of time elapses, and a cavity, which is formed around the periphery of the master mold by cross-linking of the silicon resin, is detached from the master mold. The cavity of the silicon resin is thereby obtained.

Next, the cavity is positioned inside the casing, and the casing is set on a turntable. A hollow portion forming member and the sleeve 30 are positioned inside the casing along an axial line of the cylindrical casing. A mixed paste of aluminum hydroxide, polyurethane resin, and a curing agent is injected into the cavity through the injection hole provided in the upper portion of the casing. The injection is performed while the turntable is turning. After the injection is over, upon completion of a catalyst action, the drum main body 21 having the sleeve 30 is molded inside the cavity. Thereafter, the casing is removed from the drum main body 21 with the cavity, and the mold cavity is detached from the outer periphery of the drum main body 21.

The metal chips 23 are fixed to the crossing portions 22d of the grooved portion 22a and the grooved portion 22b in the traverse groove 22. Finally, after the drum main body 21 is molded, the outer peripheral surface 21f of the drum main body 21, the inner surface of the traverse groove 22, the first end surface 21c, and the second end surface 21d are coated sequentially with a copper plating layer, a nickel plating layer, a chrome plating layer, and the like to form a plating layer 21m. The above process yields the traverse drum 17 shown in FIGS. 1 to 3.

The hollow portion forming member is positioned inside the casing so that the hollow portion 21a is formed in the drum main body 21. Furthermore, at molding of the drum main body 21, the sleeve 30 is positioned in the casing in advance so that the sleeve 30 can be formed by insert molding. By forming the sleeve 30 into a unified piece with the resin that forms the drum main body 21, the sleeve 30 and the drum main body 21 can be firmly coupled to each other, and the sleeve 30 can be easily arranged inside the drum main body 21.

As explained above, in the traverse drum 17 according to the first embodiment, the sleeve 30 is arranged in a portion of the resin drum main body 21 that is rotatably supported by the supporting member 103 of the driving section 100. The resin drum main body 21 therefore can be supported by the supporting member 103 with the sleeve 30 provided in between, and the durability of the traverse drum 17 can be improved, regardless of the material of the drum main body 21.

The sleeve 30 supports the bearings 105A and 105B arranged on the outer periphery of the supporting member 103. The bearings 105A and 105B therefore can be more reliably held than when the bearings 105A and 105B are supported by the resin drum main body 21.

The sleeve 30 is formed by insert molding at molding of the drum main body 21. This facilitates the arrangement of the sleeve 30 inside the drum main body 21.

The positioning members 30a and 30b are arranged on the inner peripheral surface of the sleeve 30. This facilitates positioning of the bearings 105A and 105B when mounting the bearings 105A and 105B on the sleeve 30. In addition, the positions of the sleeve 30 and the bearings 105A and 105B would not be shifted from each other during the winding of the yarn.

The plating layer 21m is deposited on the surface of the drum main body 21. This enhances the durability and the like of the drum main body 21.

### Second Embodiment

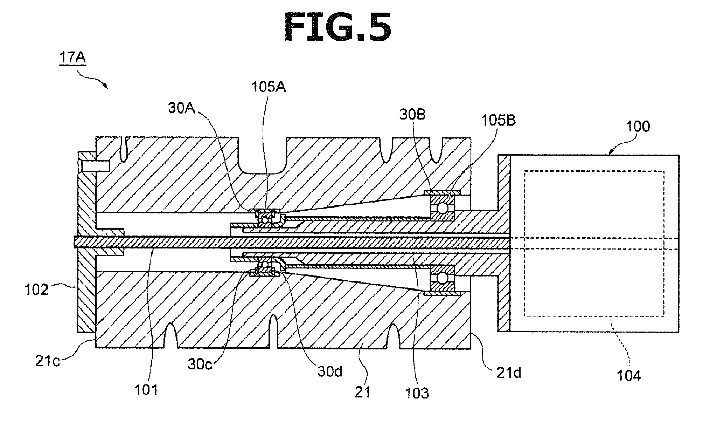

A second embodiment is explained next. In the traverse drum according to the second embodiment, changes are made to the structure of the traverse drum 17 according to the first embodiment. In the traverse drum and the like according to the second embodiment, the same components as those of the traverse drum 17 and the like according to the first embodiment are given the same numerals, and the detailed explanation thereof is omitted. As shown in FIG. 5, inside the drum main body 21 of a traverse drum 17A according to the second embodiment, sleeves 30A and 30B are arranged at different positions in the direction of a rotational axis of the traverse drum 17A. Similar to the sleeve 30 according to the first embodiment, the sleeves 30A and 30B are formed by insert molding at molding of the drum main body 21.

The inner peripheral surfaces of both the sleeves 30A and 30B are cylindrical. The sleeves 30A and 30B are arranged in the drum main body 21 such that central axes of the cylindrical inner peripheral surfaces of the sleeves 30A and 30B coincide with a rotational axis of the drum main body 21. The inner peripheral surface of the sleeve 30A supports the bearing 105A arranged on the supporting member 103. The inner peripheral surface of the sleeve 30B supports the bearing 105B arranged on the supporting member 103.

Positioning members 30c and 30d are arranged on the inner peripheral surface of the sleeve 30A at positions sandwiching the bearing 105A from two sides along the rotational axis of the drum main body 21. The positioning members 30c and 30d abut the bearing 105A, thereby preventing the bearing 105A from moving in the direction of the rotational axis of the drum main body 21.

As explained above, in the traverse drum 17A according to the second embodiment, the sleeves 30A and 30B are arranged in portions of the resin drum main body 21 that are rotatably supported by the supporting member 103 of the driving section 100. With this arrangement, the resin drum main body 21 can be supported by the supporting member 103 with the sleeves 30A and 30B provided in between. The durability of the traverse drum 17A therefore can be improved regardless of the material of the drum main body 21.

The sleeves 30A and 30B support the bearings 105A and 105B, respectively, arranged on the outer periphery of the supporting member 103. The bearings 105A and 105B therefore can be more reliably held than when the bearings 105A and 105B are supported by the resin drum main body 21.

The sleeves 30A and 30B are formed by insert molding at molding of the drum main body 21, which facilitates the arrangement of the sleeves 30A and 30B on the drum main body 21.

The positioning members 30c and 30d are arranged on the inner peripheral surface of the sleeve 30A. This facilitates the positioning of the bearing 105A when mounting the bearing 105A on the sleeve 30A. In addition, the positions of the sleeve 30A and the bearing 105A would not be shifted from each other during the winding of the yarn.

The drum main body 21 is supported at the positions of the sleeves 30A and 30B by the bearings 105A and 105B, respectively. This offers stable rotation of the drum main body 21, and therefore stable winding. The inner peripheral surfaces of the sleeves 30A and 30B are cylindrical, which facilitates fixation of the bearings 105A and 105B. In addition, the sleeves 30A and 30B maintain their balance well during the rotation. The arrangement of the sleeves 30A and 30B is also facilitated during resin molding.

### Third Embodiment

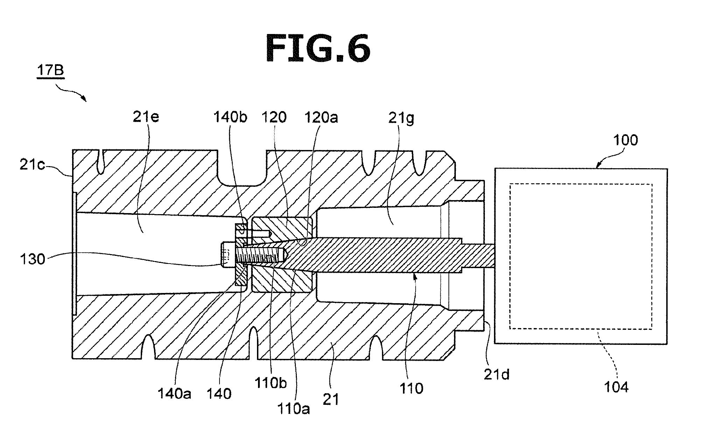

A third embodiment is explained next. In the traverse drum according to the third embodiment, changes are made to the structure of the traverse drum 17 according to the first embodiment. In the traverse drum and the like according to the third embodiment, the same components as those of the traverse drum 17 and the like according to the first embodiment are given the same numerals, and the detailed explanation thereof is omitted. As shown in FIG. 6, a sleeve 120 is arranged inside the drum main body 21 of a traverse drum 17B according to the third embodiment. The sleeve 120 is arranged substantially at the center in the axial direction of the cylindrical drum main body 21. A cylindrical hollow portion 21e is arranged inside the drum main body 21 on the first end surface 21c side with respect to the sleeve 120, while a cylindrical hollow portion 21g is arranged on the second end surface 21d side with respect to the sleeve 120.

Two end surfaces of the sleeve 120 on the first end surface 21c side and the second end surface 21d side of the drum main body 21 are coated with the resin for molding the drum main body 21. Similar to the sleeve 30 according to the first embodiment, the sleeve 120 is formed by insert molding at molding of the drum main body 21. The sleeve 120 includes an inner peripheral surface 120a that is tapered and spreads from the first end surface 21c side of the drum main body 21 toward the second end surface 21d side.

The winding section includes the traverse drum 17B, the cradle, and the driving section 100. The traverse drum 17B is driven by the driving section 100. The driving section 100 includes a shaft member 110 and the driving motor 104. The shaft member 110 is inserted into the drum main body 21 from the second end surface 21d side of the drum main body 21. One end (base end) of the shaft member 110 is coupled to the driving motor 104. A tapered conical portion 110a and a threaded portion 110b are arranged at a tip portion of the shaft member 110.

The inner peripheral surface 120a of the sleeve 120 is coupled to the conical portion 110a of the shaft member 110 so that the sleeve 120 is positioned with respect to the shaft member 110 and also that the traverse drum 17B is supported by the shaft member 110. The traverse drum 17B and the shaft member 110 are fixed to each other with a bolt 130 with a washer 140 provided in between. The washer 140 has a concave portion (surrounding portion) 140a that covers in a non-contact manner a tip portion of the conical portion 110a that extends from the sleeve 120 into the hollow portion 21e. The concave portion 140a is a depression formed around a central hole of the washer 140.

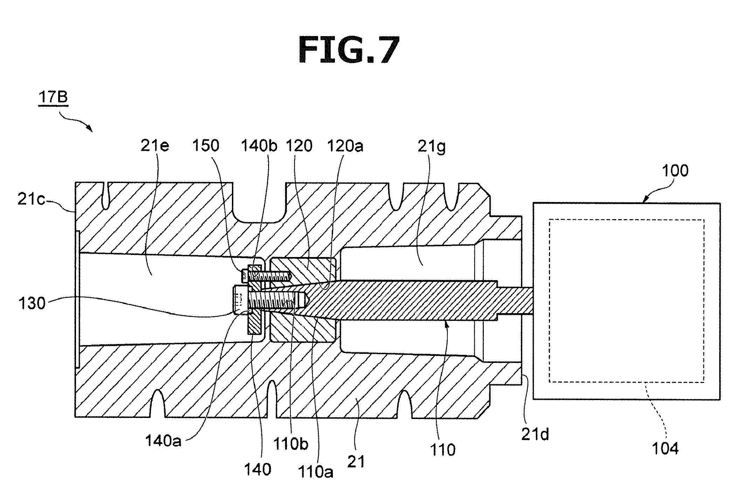

How the shaft member 110 is removed from the traverse drum 17B is explained below. As shown in FIG. 7, the washer 140 is turned over, and the washer 140 is fixed to the tip portion of the conical portion 110a with the bolt 130. A screw 150 is inserted into the sleeve 120 through each drum removal hole 140b formed in the washer 140. Multiple drum removal holes 140b are formed around the central hole into which the bolt 130 is inserted. Multiple screws 150 can be inserted through the drum removal holes 140b. When the screws 150 are inserted, the washer 140 urges the shaft member 110, and the shaft member 110 is thereby detached from the sleeve 120.

As explained above, in the traverse drum 17B according to the third embodiment, the sleeve 120 is arranged in the portion of the resin drum main body 21 that is rotatably supported by the shaft member 110 of the driving section 100. With this arrangement, the resin drum main body 21 can be supported by the shaft member 110 with the sleeve 120 provided in between, and the durability of the traverse drum 17B can be improved regardless of the material of the drum main body 21.

The sleeve 120 is formed by insert molding at molding of the drum main body 21, and therefore the sleeve 120 can be easily arranged inside the drum main body 21.

The sleeve 120 is formed to have the tapered inner peripheral surface 120a, and the inner peripheral surface 120a is supported by the shaft member 110. The sleeve 120 can thereby be coupled to the shaft member 110 without rattling because of this inner peripheral surface 120a. Furthermore, the sleeve 120 can be easily coupled to the shaft member 110.

The end surfaces of the sleeve 120 are coated with the resin that forms the drum main body 21. This means that the sleeve 120 is formed by insert molding while the inner peripheral surface 120a of the sleeve 120 is supported by a shaft mold during resin molding. Because the sleeve 120 is supported by the shaft mold only, the center can be accurately positioned when the insert molding is completed. For example, if the sleeve 120 is in contact with other members, the center position of the sleeve 120 is likely to be shifted by those members. Furthermore, the end surfaces of the sleeve 120 are coated with the resin, and therefore unity of the drum main body 21 and the sleeve 120 can be improved.

The conical portion 110a is formed in the tip portion of the shaft member 110, and the inner peripheral surface 120a of the sleeve 120 is coupled to the conical portion 110a. With this arrangement, attaching, detaching, and positioning of the shaft member 110 and the traverse drum 17B can be facilitated.

The traverse drum 17B and the shaft member 110 are fixed to each other with the bolt 130 with the washer 140 provided in between. With this arrangement, the bolt 130 can exert its tightening force in a wide range of the drum main body 21, and the fixation of the traverse drum 17B and the shaft member 110 is improved.

The traverse drum 17B and the shaft member 110 are coupled to each other with the washer 140 having the concave portion 140a. By turning over the washer 140 having the concave portion 140a, the conical portion 110a of the shaft member 110 no longer can escape into the concave portion 140a. When the screw 150 is tightened, the washer 140 urges the shaft member 110 in a direction of detaching the shaft member 110 from the traverse drum 17B. In other words, the washer 140 serves as a tool for detaching the traverse drum 17B from the shaft member 110.

The present invention is not limited to the above embodiments. For example, the sleeve 30 according to the first embodiment is tapered; however, the sleeve 30 need not be tapered. The sleeve 30 can be formed into any shape as long as it can support the bearings 105A and 105B. The supporting member 103 and the sleeve 30 can be brought into contact with each other in a slidable manner, without arranging the bearings • 105A and 105B. The sleeve 30 according to the first embodiment can extend from the first end surface 21c over to the second end surface 21d of the drum main body 21.

The sleeve 30 is formed in the drum main body 21 by insert molding.

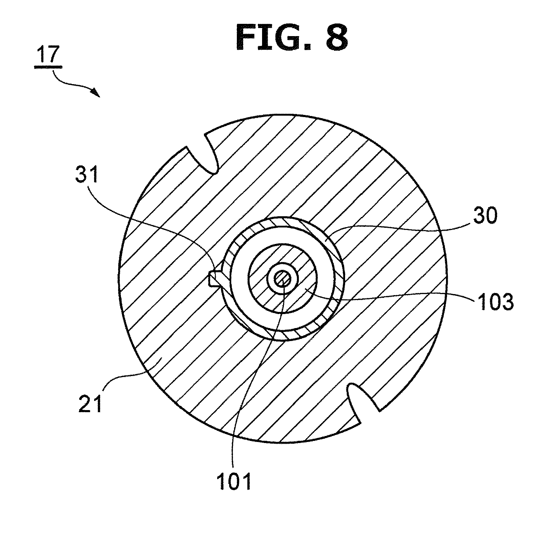

A projecting portion (coupling member) 31 can be arranged, as shown in FIG. 8, on the outer peripheral surface of the sleeve 30 according to the first embodiment. The projecting portion 31 is formed on the sleeve 30, which is an insert, to couple to the drum main body 21. The sleeve 30 therefore can be tightly fixed to the drum main body 21, and the drum main body 21 and the sleeve 30 can be rotated as a unified piece. Consequently, even under a large pressure, the sleeve 30 would not fall into a freewheeling condition with respect to the drum main body 21. The arrangement is not limited to the projecting portion 31 on the outer peripheral surface of the sleeve 30. A concave portion can be arranged. Alternatively, the outer periphery of the sleeve 30 can be polygonal or can be knurled. The projecting portion 31 can be arranged not only on the sleeve 30 according to the first embodiment, but also on the sleeves 30A and 30B according to the second embodiment and the sleeve 120 according to the third embodiment.

According to the above embodiments and modifications, the traverse drum 17 is applied to the yarn winding device of the automatic winder; however, the traverse drum 17 of the present invention can also be applied to a yarn winding device of a machine including, for example, a spinning device.

A traverse drum according to an aspect of the present invention includes a drum main body that is formed of a resin and that has a traverse groove; and a sleeve that is fixed inside the drum main body and that has an inner peripheral surface inside of which a supporting member that rotatably supports the drum main body is inserted through.

In this traverse drum, the sleeve is arranged in a portion of the resin drum main body that is rotatably supported by the supporting member. The resin drum main body therefore can be supported by the supporting member with the sleeve provided in between, and the durability of the traverse drum can be improved regardless of the material of the drum main body.

It is according to the invention that the sleeve should be formed by insert molding in the resin that forms the drum main body, and thereby arranged as a unified piece. With this arrangement, the sleeve and the drum main body are tightly coupled to each other, and the sleeve can be easily arranged in the drum main body.

It is preferable that a coupling member that couples the drum main body and the sleeve to each other into one piece is formed on an outer peripheral surface of the sleeve such that the drum main body and the sleeve rotate as the one piece in a rotational direction of the drum main body. With this arrangement, the coupling member for coupling the sleeve, which is an insert, to the drum main body is formed in the sleeve. Consequently, even under a large force, the insert is prevented from falling into a freewheeling condition with respect to the drum main body.

It is preferable that the coupling member should be at least either one of a projecting portion and a concave portion formed in the outer peripheral surface of the sleeve. With this arrangement, the sleeve can be tightly coupled to the drum main body at least with the projecting portion or the concave portion.

It is preferable that the sleeve should support, with the inner peripheral surface of the sleeve, a bearing arranged on an outer peripheral surface of the supporting member. With this arrangement, the bearing can be supported, not by the resin drum main body, but by the sleeve, and therefore the bearing can be reliably held.

It is preferable that a positioning member that positions the bearing in a direction of a rotational axis of the drum main body should be arranged on the sleeve. With this arrangement, the bearing can be easily positioned when mounting the bearing of the supporting member on the traverse drum.

It is preferable that the positioning member should prevent the bearing from moving in the direction of a rotational axis of the drum main body. With this arrangement, the positions of the traverse drum and the bearing would not be shifted with respect to each other during yarn winding.

It is preferable that a plurality of sleeves should be arranged at different positions in a direction of a rotational axis of the drum main body. With this arrangement, the sleeves are supported with the bearings at multiple positions, and therefore the drum main body can be stably rotated. This leads to stable yarn winding.

It is preferable that the sleeves should have cylindrical inner peripheral surfaces, and that the number of the sleeves arranged should be two, with central axes of the cylindrical inner peripheral surfaces coinciding with the rotational axis of the drum main body. With this arrangement, the sleeves have the cylindrical inner peripheral surfaces, which facilitate fixation of the bearings. This also makes the sleeves well-balanced during the rotation. The sleeves also can be easily arranged at molding of the resin.

It is preferable that the inner peripheral surface of the sleeve should be tapered, and that the inner peripheral surface that is tapered should be supported by the supporting member, thereby positioning the sleeve with respect to the supporting member. With this arrangement, because of the tapered inner peripheral surface, the sleeve can be arranged onto the supporting member without rattling. The arrangement of the sleeve onto the supporting member is also facilitated.

It is preferable that two end surfaces of the sleeve in a direction of a rotational axis of the drum main body should be coated with the resin that forms the drum main body. With this arrangement, the sleeve is formed by insert molding with the tapered portion of the sleeve supported by a shaft mold during resin molding. The sleeve is supported by the shaft mold only, and the center of the sleeve can be accurately determined when the insert molding is completed. If, for example, the sleeve is in contact with other members, the center position is likely to be shifted by these members. Because the two end surfaces of the sleeve are coated with the resin, unity of the drum main body and the sleeve can be improved.

It is preferable that a plating layer should be formed on a surface of the drum main body. With this arrangement, the durability of the drum main body can be improved.

According to another aspect of the present invention, a yarn winding device includes a winding section that includes the above traverse drum, and the winding section winds into a package a yarn guided by the traverse drum.

In this yarn winding device, the sleeve is arranged in a portion of the resin drum main body that is supported by the supporting member. The resin drum main body therefore can be supported by the supporting member with the sleeve provided in between, and the durability of the traverse drum can be improved regardless of the material of the drum main body.

According to still another aspect of the present invention, a yarn winding device includes a winding section that includes the above traverse drum and a drive source that drives the drum main body such that a yarn guided by the traverse drum is wound into a package. The supporting member is a shaft member that is arranged in the winding section and that has a first end and a second end. The first end of the shaft member is coupled to the drive source. A conical portion that is tapered toward a tip thereof is formed at the second end of the shaft member. The conical portion is coupled to the inner peripheral surface of the sleeve that is tapered, and the traverse drum is thereby supported by the supporting member.

In this yarn winding device, the sleeve is arranged in a portion of the resin drum main body that is rotatably supported by the supporting member. The resin drum main body therefore can be supported by the supporting member with the sleeve provided in between, and the durability of the traverse drum can be improved regardless of the material of the drum main body. In addition, the tapered portion of the sleeve is coupled onto the conical portion of the shaft member. This facilitates attaching, detaching, and positioning of the shaft member and the traverse drum with respect to each other.

It is preferable that a threaded portion should be formed at center of the conical portion, and that the traverse drum and the shaft member should be fixed to each other with a bolt with a washer provided in between, the washer having a surrounding portion that covers part of the conical portion of the shaft member in a non-contact manner. With this arrangement, the traverse drum is screwed to the shaft member with the washer provided in between. The tightening force of the screw therefore can be exerted onto a wide range of the drum main body, and the fixation of the traverse drum and the shaft member can be improved.

It is preferable that the surrounding portion should be a concave portion formed in an outer peripheral surface of a central hole of the washer. With this arrangement, by turning the washer over, part of the conical portion of the shaft member can no longer escape into the surrounding portion. Consequently, when the screw is tightened, the washer urges the shaft member in a direction of detaching the shaft member from the traverse drum. In other words, the washer can serve as a tool for detaching the traverse drum from the shaft member.

According to still another aspect of the present invention, a method of manufacturing a traverse drum includes arranging, in a mold for molding a drum main body having a traverse groove, a cylindrical sleeve into which a supporting member that rotatably supports the drum main body is inserted; injecting a resin into a gap between an inner surface of the mold and an outer peripheral surface of the sleeve; and detaching the mold from the drum main body after the sleeve is arranged as a unified piece with the resin in the drum main body.

With this method of manufacturing the traverse drum, the sleeve is formed in the drum main body by insert molding, and the sleeve and the drum main body therefore can be tightly coupled to each other. In addition, the sleeve can be easily arranged in the drum main body.

With the traverse drum, the yarn winding device, and the method of manufacturing the traverse drum according to the present invention, high durability can be ensured.

Although the invention has been described with respect to specific embodiments for a complete and clear disclosure, the appended claims are not to be thus limited but are to be construed as embodying all modifications and alternative constructions that may occur to one skilled in the art that fall within the scope of the claims.

## Claims

1. A traverse drum (17,17A,17B) comprising:
a drum main body (21) that is formed of a resin and that has a traverse groove (22); and
a sleeve (30, 30A, 30B, 120) that is fixed inside the drum main body and that has an inner peripheral surface inside of which a supporting member that rotatably supports the drum main body(21) is inserted through, **characterized in that**
the sleeve (30, 30A, 30B, 120) is formed by insert molding in the resin that forms the drum main body (21), and thereby arranged as a unified piece.

2. The traverse drum (17,17A,17B) according to Claim 1, wherein a coupling member (31), that couples the drum main body (21) and the sleeve (30,30A,30B,120) to each other into one piece, is formed on an outer peripheral surface of the sleeve (30,30A,30B,120), such that the drum main body (21) and the sleeve (30,30A,30B,120) rotate as the one piece in a rotational direction of the drum main body (21), wherein the coupling member (31) is preferably at least either one of a projecting portion and a concave portion formed in the outer peripheral surface of the sleeve (30,30A,30B,120).

3. The traverse drum (17,17A) according to any one of Claims 1 to 2, wherein the sleeve(30,30A,30B) supports, with the inner peripheral surface of the sleeve (30,30A,30B), a bearing (105A,105B) arranged on an outer peripheral surface of the supporting member.

4. The traverse drum (17,17A) according to Claim 3, wherein a positioning member (30a,30b,30c,30d), that positions the bearing (105A,105B) in a direction of a rotational axis of the drum main (21) body, is arranged on the sleeve (30,30A,30B) and preferably prevents the bearing (105A, 105B) from moving in the direction of a rotational axis of the drum main body (21).

5. The traverse drum(17,17A) according to any one of Claims 1 to 2, wherein a plurality of sleeves (30A,30B) are arranged at different positions in a direction of a rotational axis of the drum main body(21).

6. The traverse drum (17,17A) according to Claim 5, wherein
the sleeves(30A,30B) have cylindrical inner peripheral surfaces, and
the number of the sleeves (30A, 30B) arranged is two, with central axes of the cylindrical inner peripheral surfaces coinciding with the rotational axis of the drum main body(21).

7. The traverse drum(17B) according to any one of Claims 1 to 2, wherein
the inner peripheral surface of the sleeve(120) is tapered, and
the inner peripheral surface that is tapered is supported by the supporting member, thereby positioning the sleeve(120) with respect to the supporting member.

8. The traverse drum(17B) according to Claim 7, wherein two end surfaces of the sleeve(120) in a direction of a rotational axis of the drum main body(21) are coated with the resin that forms the drum main body(21).

9. The traverse drum(17,17A,17B) according to any one of Claims 1 to 8, wherein a plating layer (21m) is formed on a surface of the drum main body (21).

10. A yarn winding device comprising a winding section that includes the traverse drum(17,17A,17B) according to any one of Claims 1 to 9, wherein the winding section winds into a package a yarn guided by the traverse drum(17,17A,17B).

11. A yarn winding device comprising a winding section that includes the traverse drum(17B) according to Claim 7 or 8 and a drive source (104) that drives the drum main body such that a yarn guided by the traverse drum is wound into a package, wherein
the supporting member(103) is a shaft member(110) that is arranged in the winding section and that has a first end and a second end,
the first end of the shaft member (110) is coupled to the drive source (104),
a conical portion(110a) that is tapered toward a tip thereof is formed at the second end of the shaft member(110), and
the conical , portion (110a) is coupled to the inner peripheral surface of the sleeve(120) that is tapered, and the traverse drum(17B) is thereby supported by the supporting member(103).

12. The yarn winding device according to Claim 11, wherein
a threaded portion (110b) is formed at center of the conical portion (110a), and
the traverse drum(17B) and the shaft member(110) are fixed to each other with a bolt(130) with a washer (140) provided in between, the washer(140) having a surrounding portion(140a) that covers part of the conical portion of the shaft member(110) in a non-contact manner, and wherein the surrounding portion(140a) is preferably a concave portion formed in an outer peripheral surface of a central hole of the washer(140).

13. A method of manufacturing a traverse drum(17,17A,17B) comprising:
arranging, in a mold for molding a drum main body (21) having a traverse groove(22), a cylindrical sleeve(30,30A,30B,120) into which a supporting member(103) that rotatably supports the drum main body(21) is inserted;
injecting a resin into a gap between an inner surface of the mold and an outer peripheral surface of the sleeve (30, 30A, 30B, 120); and
detaching the mold from the drum main body(21) after the sleeve(30,30A,30B,120) is arranged as a unified piece with the resin in the drum main body(21).

## Patentansprüche

1. Changiertrommel (17, 17A, 17B), umfassend:
einen Trommelhauptkörper (21), der aus einem Kunststoff ausgebildet ist und eine Changiernut (22) aufweist; und
eine Hülse (30, 30A,30B, 120), die in dem Trommelhauptkörper fixiert ist und die eine innere umfängliche Oberflächenseite aufweist, in der ein Trägerelement, das den Trommelhauptkörper (21) drehbar trägt, durchgeführt ist, **dadurch gekennzeichnet, dass**
die Hülse (30, 30A, 30B, 120) durch Spritzgießen in den Kunststoff, der den Trommelhauptkörper (21) ausbildet, ausgebildet ist und dadurch als ein vereinigtes Teil angeordnet ist.

2. Changiertrommel (17, 17A, 17B) nach Anspruch 1, wobei ein Kopplungselement (31), das den Trommelhauptkörper (21) und die Hülse (30, 30A, 30B, 120) aneinander zu einem Stück koppelt, an einer äußeren umfänglichen Oberfläche der Hülse (30, 30A, 30B, 120) ausgebildet ist, sodass sich der Trommelhauptkörper (21) und die Hülse (30, 30A, 30B, 120) als das eine Stück in einer Drehrichtung des Trommelhauptkörpers (21) drehen, wobei das
Kopplungselement (31) vorzugsweise mindestens einer eines Vorsprungsabschnitts und eines Konkavabschnitts ist, der in der äußeren Oberfläche der Hülse (30, 30A, 30B, 120) ausgebildet ist.

3. Changiertrommel (17, 17A) nach einem der Ansprüche 1 bis 2, wobei die Hülse (30, 30A, 30B) mit der inneren umfänglichen Oberfläche der Hülse (30, 30A, 30B) ein Lager (105A, 105B) trägt, das an einer äußeren umfänglichen Oberfläche des Trägerelements angeordnet ist.

4. Changiertrommel (17, 17A) nach Anspruch 3, wobei ein Positionierungselement (30a, 30b, 30c, 30d), welches das Lager (105A, 105B) in einer Richtung in einer Drehachse des Trommelhauptkörpers (21) positioniert, an der Hülse (30, 30A, 30B) angeordnet ist und vorzugsweise das Lager (105A, 105B) daran hindert, sich in der Richtung einer Drehachse des Trommelhauptkörpers (21) zu bewegen.

5. Changiertrommel (17, 17A) nach einem der Ansprüche 1 bis 2, wobei mehrere Hülsen (30A, 30B) an unterschiedlichen Positionen in einer Richtung einer Drehachse des Trommelhauptkörpers (21) angeordnet sind.

6. Changiertrommel (17, 17A) nach Anspruch 5, wobei die Hülsen (30A, 30B) zylindrische innere umfängliche Oberflächen aufweisen, und
die Anzahl der Hülsen (30A, 30B) die angeordnet sind, zwei ist, wobei zentrale Achsen der zylindrischen inneren umfänglichen Oberflächen mit der Drehachse des Trommelhauptkörpers (21) übereinstimmen.

7. Changiertrommel (17B) nach einem der Ansprüche 1 bis 2, wobei
die innere umfängliche Oberfläche der Hülse (120) verjüngt ist, und
die innere umfängliche Oberfläche, die verjüngt ist, durch das Trägerelement getragen wird, wodurch die Hülse (120) bezüglich des Trägerelements positioniert wird.

8. Changiertrommel (17B) nach Anspruch 7, wobei zwei Endoberflächen der Hülse (120) in einer Richtung einer Drehachse des Trommelhauptkörpers (21) mit dem Kunststoff beschichtet sind, der den Trommelhauptkörper (21) ausbildet.

9. Changiertrommel (17, 17A, 17B) nach einem der Ansprüche 1 bis 8, wobei eine Plattierungsschicht (21m) an einer Oberfläche des Trommelhauptkörpers (21) ausgebildet ist.

10. Garnwickeleinrichtung, umfassend einen Wickelabschnitt, der die Changiertrommel (17, 17A, 17B) nach einem der Ansprüche 1 bis 9 beinhaltet, wobei der Wickelabschnitt ein Garn, das durch die Changiertrommel (17, 17A, 17B) geführt wird, zu einem Bündel wickelt.

11. Garnwickeleinrichtung, umfassend einen Wickelabschnitt, der die Changiertrommel (17B) nach Anspruch 7 oder 8 und eine Antriebsquelle (104) beinhaltet, die den Trommelhauptkörper antreibt, sodass ein Garn, das durch die Changiertrommel geführt wird, in ein Bündel gewickelt wird, wobei
das Trägerelement (103) ein Wellenelement (110) ist, das in dem Wickelabschnitt angeordnet ist, und das ein erstes Ende und ein zweites Ende aufweist,
wobei das erste Ende des Wellenelements (110) an die Antriebsquelle (104) gekoppelt ist,
ein konischer Abschnitt (110a), der zu einer Spitze davon verjüngt ist, an dem zweiten Seitenende (110) ausgebildet ist, und
der konische Abschnitt (110a) an die innere umfängliche Oberfläche der Hülse (120), die verjüngt ist, gekoppelt ist und die Changiertrommel (17B) dadurch durch das Trägerelement (103) getragen wird.

12. Garnwickeleinrichtung nach Anspruch 11, wobei ein Gewindeabschnitt (110b) an einem Zentrum des konischen Abschnitts (110a) ausgebildet ist, und
die Changiertrommel (17B) und das Schaftelement (110) aneinander mit einer Schraube (130) mit einer Unterlegscheibe (140) fixiert sind, die dazwischen bereitgestellt ist, wobei die Unterlegscheibe (140) einen umgebenden Abschnitt (140a) aufweist, der einen Teil des konischen Abschnitts des Schaftelements (110) in einer nicht kontaktierenden Weise abdeckt und wobei der umgebende Abschnitt (140a) vorzugsweise ein konkaver Abschnitt ist, der in einer äußeren umfänglichen Oberfläche eines zentralen Lochs der Unterlegscheibe (140) ausgebildet ist.

13. Verfahren zum Herstellen einer Changiertrommel (17, 17A, 17B), umfassend:
Anordnen in einer Form zum Gießen eines Trommelhauptkörpers (21), der eine Changiernut (22) aufweist, einer zylindrischen Hülse (30, 30A, 30B, 120), in welche ein Trägerelement (103), das den Trommelhauptkörper (21) drehbar trägt, eingeführt ist;
Einspritzen eines Kunststoffs in eine Lücke zwischen einer inneren Oberfläche der Form und einer äußeren umfänglichen Oberfläche der Hülse (30, 30A, 30B, 120); und
Lösen der Form von dem Trommelhauptkörper (21), nachdem die Hülse (30, 30A, 30B, 120) als ein mit dem Kunststoff vereinigtes Stück in dem Trommelhauptkörper angeordnet ist.

## Revendications

1. Tambour de traverse (17, 17A, 17B) comprenant :
un corps principal de tambour (21) qui est constitué d'une résine et qui a une rainure de traverse (22) ; et
un manchon (30, 30A, 30B, 120) qui est fixé à l'intérieur du corps principal de tambour et a une surface périphérique intérieure, à l'intérieur de laquelle est inséré un élément de support qui supporte à rotation le corps principal de tambour (21),
**caractérisé en ce que** :
le manchon (30, 30A, 30B, 120) est formé par moulage par insertion dans la résine qui forme le corps principal de tambour (21) et agencé par là-même comme une pièce unifiée.

2. Tambour de traverse (17, 17A, 17B) selon la revendication 1, dans lequel un élément de couplage (31), qui couple le corps principal de tambour (21) et le manchon (30, 30A, 30B, 120) l'un à l'autre en une seule pièce, est formé sur la surface périphérique extérieure du manchon (30, 30A, 30B, 120) de sorte que le corps principal de tambour (21) et le manchon (30, 30A, 30B, 120) tournent en tant que seule pièce dans le sens de rotation du corps principal de tambour (21), dans lequel l'élément de couplage (31) est de préférence au moins l'une ou l'autre d'une partie saillante et d'une partie concave formées dans la surface périphérique extérieure du manchon (30, 30A, 30B, 120).

3. Tambour de traverse (17, 17A) selon l'une quelconque des revendications 1 à 2, dans lequel le manchon (30, 30A, 30B) supporte, avec la surface périphérique intérieure du manchon (30, 30A, 30B), un palier (105A, 105B) agencé sur la surface périphérique extérieure de l'élément de support.

4. Tambour de traverse (17, 17A) selon la revendication 3, dans lequel un élément de positionnement (30a, 30b, 30c, 30d) qui positionne le palier (105A, 105B) dans la direction de l'axe rotatif du corps principal de tambour (21) est agencé sur le manchon (30, 30A, 30B) et empêche de préférence que le palier (105A, 105B) ne se déplace dans la direction de l'axe de rotation du corps principal de tambour (21).

5. Tambour de traverse (17, 17A) selon l'une quelconque des revendications 1 à 2, dans lequel une pluralité de manchons (30A, 30B) sont agencés dans différentes positions dans la direction de l'axe de rotation du corps principal de tambour (21).

6. Tambour de traverse (17, 17A) selon la revendication 5, dans lequel :
les manchons (30A, 30B) présentent des surfaces périphériques intérieures cylindriques et
le nombre de manchons (30A, 30B) agencés est de deux,
les axes centraux des surfaces périphériques intérieures cylindriques coïncidant avec l'axe de rotation du corps principal de tambour (21).

7. Tambour de traverse (17B) selon l'une quelconque des revendications 1 à 2, dans lequel :
la surface périphérique intérieure du manchon (120) est effilée et
la surface périphérique intérieure qui est effilée est supportée par l'élément de support, positionnant par là-même le manchon (120) par rapport à l'élément de support.

8. Tambour de traverse (17B) selon la revendication 7, dans lequel deux surfaces d'extrémité du manchon (120) dans la direction de l'axe de rotation du corps principal de tambour (21) sont revêtues de la résine qui forme le corps principal de tambour (21).

9. Tambour de traverse (17, 17A, 17B)) selon l'une quelconque des revendications 1 à 8, dans lequel une couche de placage (21m) est formée sur une surface du corps principal de tambour (21).

10. Dispositif d'enroulement de fil comprenant une section d'enroulement qui comporte le tambour de traverse (17, 17A, 17B) selon l'une quelconque des revendications 1 à 9, dans lequel la section d'enroulement enroule un fil guidé par le tambour de traverse (17, 17A, 17B) dans un paquet .

11. Dispositif d'enroulement de fil comprenant une section d'enroulement qui comporte le tambour de traverse (17B) selon la revendication 7 ou 8 et une source d'entraînement (104) qui entraîne le corps principal de tambour de sorte qu'un fil guidé par le tambour de traverse soit enroulé dans un paquet , dans lequel :
l'élément de support (103) est un élément d'arbre (110) qui est agencé dans la section d'enroulement et qui présente une première extrémité et une seconde extrémité,
la première extrémité de l'élément d'arbre (110) est couplée à la source d'entraînement (104),
une partie conique (110a) qui est effilée vers son bout est formée sur la seconde extrémité de l'élément d'arbre (110), et
la partie conique (110a) est couplée à la surface périphérique intérieure du manchon (120) qui est effilée et le tambour de traverse (17B) est supporté par là-même par l'élément de support (103).

12. Dispositif d'enroulement de fil selon la revendication 11, dans lequel :
une partie filetée (110b) est formée au centre de la partie conique (110a) et
le tambour de traverse (17B) et l'élément d'arbre (110) sont fixés l'un à l'autre avec un boulon (130) avec une rondelle (140) prévue entre eux, la rondelle (140) présentant une partie environnante (140a) qui couvre une partie de la partie conique de l'élément d'arbre (110) sans contact, et dans lequel la partie environnante (140a) est de préférence une partie concave formée dans une surface périphérique extérieure d'un trou central de la rondelle (140).

13. Procédé de fabrication d'un tambour de traverse (17, 17A, 17B) comprenant :
l'agencement dans un moule pour le moulage d'un corps principal de tambour (21) présentant une rainure de traverse (22), un manchon cylindrique (30, 30A, 30B, 120), dans lequel un élément de support (103) qui supporte à rotation le corps principal de tambour (21) est inséré ;
l'injection d'une résine dans un intervalle entre une surface intérieure du moule et une surface périphérique extérieure du manchon (30, 30A, 30B, 120) ; et
le détachement du moule du corps principal de tambour (21) après que le manchon (30, 30A, 30B, 120) a été agencé en tant que pièce unifiée avec la résine du corps principal de tambour (21).
